# EUROPÄISCHE PATENTSCHRIFT

(11) **EP 0 570 758 B1**
(45) Veröffentlichungstag und Bekanntmachung des Hinweises auf die Patenterteilung: **19.06.1996**
(21) Anmeldenummer: 93107236.7
(22) Anmeldetag: 05.05.1993
(51) Int. Cl.: A47J 43/08

(54) **Rühr- und Knetwerkzeug für eine Küchenmaschine, insbesondere Mehrzweckküchenmaschine**
Mixing and kneading device for multi-purpose food processor
Outil mélangeur et pétrisseur pour robot de cuisine universel

(30) Priorität: 11.05.1992 DE 4215400
(43) Veröffentlichungstag der Anmeldung: 24.11.1993
(73) Patentinhaber: Braun Aktiengesellschaft, Frankfurt am Main (DE)
(72) Erfinder: Fritsch, Thomas, W-6239 Eppstein 4 (DE); Golob, Jürgen, W-6382 Friedrichsdorf (DE)

(56) Entgegenhaltungen:
- EP-A- 0 022 465
- CH-A- 431 843
- DE-A- 4 033 020
- DE-B- 1 036 181
- DE-C- 859 203
- DE-C- 4 126 516
- NL-C- 112 849

## Beschreibung

Die Erfindung betrifft ein Rühr- und Knetwerkzeug für eine Küchenmaschine, insbesondere für eine Mehrzweckküchenmaschine, mit einem in einem Gehäuse angeordneten Getriebe mit einer ersten Getriebestufe, das eingangsseitig einerseits eine im Gehäuse gelagerte Antriebswelle aufweist, die auf einer in den Arbeitsbehälter der Küchenmaschine hineinragenden, von der Antriebseinrichtung der Küchenmaschine in Drehung versetzbaren Werkzeugwelle aufsetzbar und mit dieser drehfest kuppelbar ist und das ausgangsseitig andererseits eine Abtriebswelle mit einer ersten Kupplungseinrichtung zum Ankuppeln von mindestens einem die Nahrungsmittel im Arbeitsbehälter bearbeitenden Werkzeug aufweist, wobei die Abtriebswelle seitlich neben der Antriebswelle im Gehäuse gelagert ist und mit seiner das Werkzeug kuppelbaren ersten Kupplungseinrichtung auf den Boden des Arbeitsbehälters gerichtet ist und wobei das Getriebe eine zweite Getriebestufe aufweist, die ausgangsseitig eine zweite Abtriebswelle mit einer zweiten Kupplungseinrichtung zum Ankuppeln von mindestens einem weiteren, die Nahrungsmittel bearbeitenden Werkzeug aufweist.

Ein Rühr- und Knetwerkzeug für eine Küchenmaschine ist bereits aus der DE-PS 34 33 008 bekannt. Bei dieser bekannten Küchenmaschine ist ein Getriebe unter dem Arbeitsbehälter im Maschinengehäuse angeordnet. Es weist zwei Abtriebswellen auf, die die gleiche Drehrichtung haben und durch einen Rohransatz des Behälterbodens in den Arbeitsbehälter ragen. Zum Antrieb eines in dem Arbeitsbehälter umlaufenden Schlagbesens ist ein aus einem Gehäuse bestehender Werkzeugträger, an dem ein als Werkzeug dienender Schlagbesen drehbar gelagert ist, unmittelbar mit der Kupplung der langsameren Abtriebswelle verbindbar. Ein den Schlagbesen antreibendes Zahnrad wird durch Eingriff mit einer Zahnradverzahnung, die sich an der schnelleren Abtriebswelle befindet, in Drehung versetzt. Obwohl die bekannte Küchenmaschine zwei Abtriebswellen mit unterschiedlichen Antriebsdrehzahlen aufweist, können mit der bekannten Anordnung rotierende Werkzeuge, deren Rotationsachse in dem Arbeitsbehälter um eine zentrale Achse läuft, nur dann mit einer einzigen Drehzahl angetrieben werden, wenn der Antriebsmotor der Küchenmaschine nur eine einzige vorgegebene Drehzahl abgibt, d.h., ist der Schlagbesen beispielsweise zum Schlagen von Sahne, also hochdrehend, ausgelegt, so kann er festere Nahrungsmittel kaum bearbeiten, da einerseits hierfür die Drehzahl zu hoch und andererseits aber das Drehmoment dann zu niedrig ist.

Weiterhin ist aus dem deutschen Gebrauchsmuster 19 17 487 ein Rühr- und Knetwerkzeug der eingangs beschriebenen Art bekannt, an dem aus dem mit einer ersten und zweiten Getriebestufe versehenen Gehäuse zwei Abtriebswellen herausragen, die mit verschiedenen Werkzeugen zum Bearbeiten von Nahrungsmitteln kuppelbar sind, wobei die Werkzeuge auf verschiedenen Radien angeordnet sind und so in den Arbeitsbehälter hineinragen. Bei diesem Rühr- und Knetwerkzeug ist es als weniger vorteilhaft anzusehen, daß sich das Gehäuse mit dem Getriebe nahezu über den gesamten Öffnungsquerschnitt des Arbeitsbehälters erstreckt, so daß ein verhältnismäßig unhandliches und breit bauendes Rühr- und Knetwerkzeug entsteht. Aufgrund der örtlichen Trennung der ersten und zweiten Kupplungseinrichtung ist es oft schwer, das richtige Werkzeug in die richtige Kupplungseinrichtung einzusetzen.

Aus der EP-A-0 022 465 ist schließlich noch eine Antriebseinheit für eine Küchenmaschine bekannt, bei der aus dem Motorgehäuse drei konzentrisch zueinander verlaufende Abtriebswellen mit je einer Kupplungseinrichtung herausragen, die mit Küchengeräten dreier verschiedener Arten kuppelbar und antreibbar sind. Die Getriebeeinrichtung ist eine im Gerätesockel fest stehende Einheit, die auch nicht aus dem Gerätesockel abnehmbar ist.

Aufgabe der Erfindung ist es daher, ein Rühr- und Knetwerkzeug zu schaffen, durch das obige Nachteile vermieden werden, das kompakt baut, das bei wenigen Bauteilen leicht montierbar ist und das einen einfachen und schnellen Werkzeugwechsel ermöglicht.

Diese Aufgabe wird erfindungsgemäß durch die Merkmale des kennzeichnenden Teils des Patentanspruchs 1 gelöst. Bei dem erfindungsgemäßen Rühr- und Knetwerkzeug stehen an einer um eine Mittelachse des Arbeitsbehälters umlaufenden Rotationsachse zwei Abtriebsdrehzahlen zur Verfügung, so daß mit verschiedenen Werkzeugen eine Vielzahl unterschiedlicher Rühr- und Knetarbeiten ausgeführt werden können. So kann der schnellere Werkzeugabtrieb mit einem Schlagbesen verbunden werden, um beispielsweise Sahne oder Eischnee zu schlagen, während der langsamere Werkzeugabtrieb vorzugsweise mit einem stabileren Rührbesen gekuppelt werden kann, um damit Rührteige herzustellen oder auch Sahne oder Eischnee mit einem Teig zu vermischen oder unterzuheben. Das größere Drehmoment des langsameren Werkzeugabtriebs ermöglicht darüberhinaus auch das Kneten von Teigen mit einem Knethaken. Wird das Rühr- und Knetwerkzeug In einer Küchenmaschine eingesetzt deren Motordrehzahl veränderbar ist, so kann für jeden Anwendungsfall die optimale Drehgeschwindigkeit am entsprechenden Werkzeug erreicht werden. Dadurch daß die erste und zweite Abtriebswelle konzentrisch zueinander verlaufen, also am selben Ort am Gehäuse ausgebildet sind, lassen sich die Werkzeuge immer an derselben Stelle montieren, so daß einer Bedienungsperson die Montage erleichtert wird. Hierdurch wird gleichzeitig ein kompaktes und mit möglichst wenig Bauteilen versehendes Rühr- und Knetwerkzeug erreicht.

Dabei drehen sich die Werkzeuge sowohl um ihre eigene Achse wie um die Antriebswelle, d.h., in dieser Ausführungsform braucht sich nicht der Arbeitsbehälter der Küchenmaschine selbst um seine Achse zu drehen, damit die Nahrungsmittel von den Werkzeugen gleichmäßig im Arbeitsbehälter erfaßt werden, sondern es dreht sich hier das gesamte Getriebegehäuse um die Antriebswelle der Küchenmaschine und läßt dabei die Werkzeuge im Arbeitsbehälter kreisen, so daß auch hier die Nahrungsmittel im Arbeitsbehälter gleichmäßig von den Werkzeugen erfaßt werden.

Bei dem Rühr- und Knetwerkzeug ergibt sich für die zweite, schneller drehende Abtriebswelle noch der Vorteil, daß die Drehbewegung der zweiten Abtriebswelle zur Drehbewegung des Getriebegehäuses gegenläufig ist. Dies führt dazu, daß sich die beiden Drehbewegungen am Werkzeug in der Mitte des Arbeitsbehälters, also an dem die Antriebswelle umgebenden rohrförmigen Schacht (Rohransatz), addieren, während sie sich an ihrem äußeren Rand subtrahieren. Hierdurch wird die Bewegung des Schlagbesens relativ zur Topfwandung der Arbeitsschüssel vergrößert, so daß vor allem bei der Herstellung von Schlagsahne und Eischnee eine bessere Volumenzunahme erreicht wird. Auch die Spritzneigung des bearbeiteten Gutes ist bei dieser gegenläufigen Drehbewegung geringer. In der Mitte, also am rohrförmigen Schacht des Arbeitsbehälters, sind die Drehbewegung des Getriebes und die Drehbewegung des die Nahrungsmittel bearbeitenden Werkzeuges gleichläufig, so daß aufgrund der hier ohnehin erheblich kleineren Umfangsfläche des Schachtes die Durchmischung der Nahrungsmittel eine geringere Rolle als an der äußeren Topfwandung spielt.

Durch die Weiterbildung der Erfindung gemäß Anspruch 2 wird in einer ersten Ausführungsform ein einfacher Getriebeaufbau erreicht, der sich vor allem für Küchenmaschinen mit einer zentralen, in einem Rohransatz des Arbeitsbehälters angeordneten Abtriebswelle eignet, die durch eine Steckkupplung mit der Antriebswelle des Getriebes verbindbar ist.

Durch die Kombination eines Stirnradgetriebes mit einem Planetengetriebe, das ausgangsseitig konzentrisch zur ersen Abtriebswelle die zweite Abtriebswelle trägt, wird auf besonders einfache Weise ein schnell laufender (erste Abtriebswelle) und ein langsam laufender (zweite Abtriebswelle) Abtrieb erreicht. Während mit der schneller drehenden ersten Abtriebswelle ein mit dünneren Drähten versehener Schneebesen kuppelbar ist und somit insbesondere schnell Sahne, Eischnee, Majonaise etc. geschlagen werden kann, ist mit der langsam drehenden zweiten Abtriebswelle ein mit dickeren Drähten versehener Rührbesen kuppelbar, mit dem dann besonders gut festere Nahrungsmittel, wie Kartoffeln, Teig etc. optimal verrührbar sind. Diese Ausgestaltung des Getriebes zeichnet sich durch einen kompakten Aufbau aus und, bedingt durch die Leistungsverzweigung des Planetengetriebes, kann bei höherer Drehzahl dennoch ein hohes Drehmoment an der schneller laufenden zweiten Kupplungseinrichtung erreicht werden.

Gemäß den Merkmalen des Anspruchs 3 erfolgt der Antrieb der beiden Kupplungseinrichtungen über ein einziges Hohlrad, wodurch eine geringe axiale Bauhöhe der gesamten Getriebeanordnung bei wenigen Bauteilen erzielt wird.

Anstelle eines Planetengetriebes kann nach einer zweiten Ausführungsform der Erfindung gemäß Anspruch 4 der zweite Werkzeugabtrieb auch durch eine aus Stirnrädern bestehende zweite Getriebestufe mit einem Zwischenrad gebildet sein, wobei koaxial zur ersten Abtriebswelle ein die zweite Abtriebswelle bildendes drittes Stirnrad angeordnet ist, das über ein im Getriebegehäuse gelagertes Zwischenrad von einem mit der Antriebswelle drehfest verbundenen Stirnrad angetrieben wird. Diese Variante ist etwas kostengünstiger und ermöglicht eine größere Übersetzung an der zweiten Abtriebswelle. Das Getriebe baut jedoch etwas höher und durch die fehlende Leistungsverzweigung ist das übertragbare Drehmoment an der zweiten Abtriebswelle etwas niedriger.

Durch die Weiterbildung gemäß den Merkmalen des Patentanspruchs 5 wird auf besonders einfache Weise die zweite Lagerstelle für die erste Abtriebswelle im Steg gebildet, während die andere Lagerstelle vom Gehäuse gebildet wird. Gleichzeitig läßt sich zwischen dem Steg und dem Deckel besonders einfach die zweite Getriebestufe lagern und sie kann über den Deckel in das Gehäuse problemlos eingesetzt werden, da der Steg ebenfalls ein aus dem Gehäuse herausnehmbares Bodenteil bildet.

Bei einer Einrichtung gemäß Anspruch 6 entsteht für beide Rühr- und Knetwerkzeuge eine doppelseitige Lagerung der ersten Abtriebswelle, wodurch sich auch eine stabile Lagerung für die zweite Abtriebswelle ergibt, da diese gemäß den Merkmalen nach Anspruch 7 auf der ersten Abtriebswelle drehbar gelagert ist.

Mit der Weiterbildung nach Anspruch 9 wird für die Getriebeanordnungen beider Rühr- und Knetwerkzeuge eine einfache Abdichtung der zweiten Abtriebswelle gegenüber dem Gehäuse erreicht, so daß ein Eindringen von Schmutz und Wasser in das Gehäuse vermieden wird. Durch die Gleitlagerausführung zwischen der ersten und zweiten Abtriebswelle kann auch hier kein Schmutz und Wasser in das Gehäuse eindringen. Der als Dichtmanschette ausgebildete Dichtring kann besonders einfach das fertigungsbedingt auftretende axiale Spiel im Getriebe auffangen. Durch diese Anordnung ist der Dichtring weiterhin vor einer Beschädigung von außen geschützt und er läßt sich vor dem Verschließen des Getriebegehäuses leicht montieren.

Das Getriebe kann gemäß den Merkmalen des Anspruchs 10 erfindungsgemäß weiterhin so ausgestaltet sein, daß die Rotationsachsen der Antriebswelle und der Werkzeugabtriebe sich über dem Arbeitsbehälter schneiden. Hierdurch ergibt sich eine für das Schlagen und Rühren günstige Arbeitslage der Werkzeuge im Arbeitsbehälter, und dies insbesondere dann, wenn der Boden des Arbeitsbehälters am Übergang sowohl zum inneren Schacht wie zur äußeren Behälterwandung stark gerundet ist. Hierdurch wird auch vermieden, daß der Getriebearm des Rühr- und Knetwerkzeuges sich allzu weit von der Mitte des Arbeitsbehälters weg erstreckt, wodurch unerwünschte Biegebelastungen vermieden werden.

Gemäß den Merkmalen des Anspruchs 11 kann zumindest die aufwendiger herstellbare Schrägverzahnung an einem der beiden miteinander kämmenden Stirnrädern vermieden werden, was die Kosten des Rühr- und Knetwerkzeuges reduziert.

Zwei Ausführungsbeispiele der Erfindung sind in der Zeichnung dargestellt und werden im folgenden näher beschrieben. Es zeigen:
- Fig. 1: eine perspektivische Darstellung einer Küchenmaschine mit dem erfindungsgemäßen Rühr- und Knetwerkzeug,
- Fig. 2: einen Querschnitt durch die mit einem schnell drehenden Schlagbesen verbundene Getriebenordnung des Rühr- und Knetwerkzeuges gemäß Fig. 1, wobei die zweite Getriebestufe als erstes Ausführungsbeispiel von einem Planetenradgetriebe gebildet wird,
- Fig. 3: einen Querschnitt entlang der Linie A-A in Fig. 2,
- Fig. 4: einen Querschnitt entlang der Linie B-B in Fig. 2,
- Fig. 5: einen Querschnitt durch die mit einem langsamer laufenden Rührbesen verbundene Getriebeanordnung des Rühr- und Knetwerkzeuges gemäß Fig. 1,
- Fig. 6: einen Querschnitt entlang der Linie C-C gemäß Fig. 5 und
- Fig. 7: einen Querschnitt durch eine zweite Ausführungsform einer Getriebeanordnung eines Rühr- und Knetwerkzeuges gemäß Fig. 1, wobei die zweite Getriebestufe ebenfalls wie die erste Getriebestufe von einer Stirnradverzahnung gebildet wird.

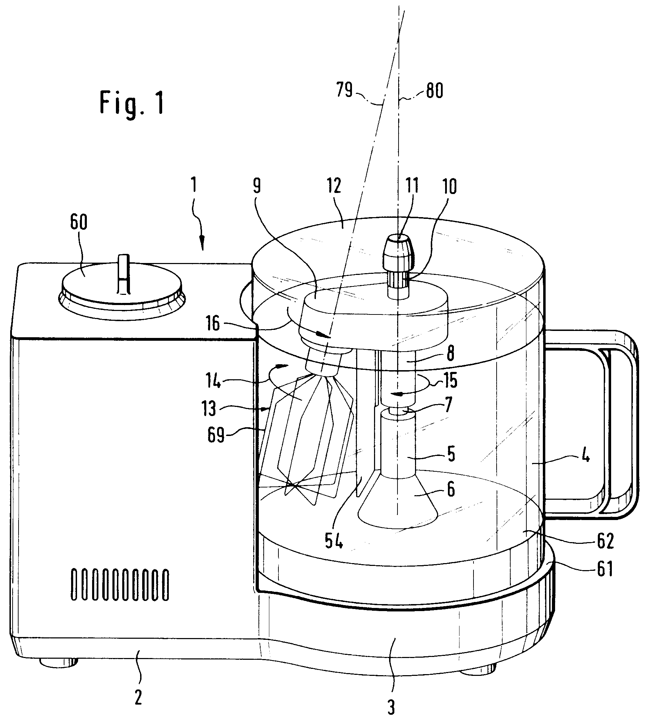

Die in Fig. 1 dargestellte Mehrzweckküchenmaschine 1 weist ein quaderförmiges Motorgehäuse 2 auf, in dem ein elektrischer Antriebsmotor (nicht dargestellt) über einen Schalter 60 ein- bzw. ausschaltbar ist. Der Antriebsmotor ist über ein Im Gerätesockel 3 ausgebildetes Getriebe (nicht dargestellt) mit einer aus dem Gerätesockel 3 herausragenden Werkzeugwelle 7 verbunden, die zum Antrieb von auf ihr aufsteckbaren Werkzeugen, die zum Bearbeiten von Nahrungsmitteln dienen, vorgesehen ist. In dem Ausführungsbeispiel gemäß Fig. 1 ist auf der Werkzeugwelle 7 ein Getriebearm 9 aufgesteckt, an dem letztendlich ein Werkzeug 13 bzw. 43 befestigbar ist. Selbstverständlich können auch Werkzeuge, in denen kein Getriebe integriert ist, direkt auf der Werkzeugwelle 7 aufgesteckt werden.

Der Gerätsockel 3 weist nach Fig. 1 einen zylindrischen Gehäuseabschnitt 61 zur Aufnahme eines Arbeitsbehälters 4 auf. Der zylindrische Arbeitsbehälter 4 weist in seinem Zentrum einen Rohransatz 5 auf, der mit einem sich kegelig nach unten erweiternden, ebenfalls rohrförmigen Fuß 6 fest mit dem Boden 62 des Arbeitsbehälters 4 verbunden ist. Den Rohransatz 5 und den Fuß 6 durchdringt die Werkzeugwelle 7, die drehbar im Gehäusesockel 3 gelagert und abgedichtet ist. Die Werkzeugwelle 7 ragt mit ihrem Ende oben aus dem Rohransatz 5 in den Arbeitsbehälter 4 hinein und ist dort durch einen Eingriff, beispielsweise einen Sechskant oder eine Steckkupplung (nicht dargestellt) mit einer Antriebswelle 8 eines Werkzeuges 13 drehfest verbindbar. In dem Ausführungsbeispiel nach Fig. 1, 2, 5 und 7 ist das Werkzeug 13, das seitlich in den Arbeitsbehälter 4 ragt, über den Getriebearm 9 und eine Antriebswelle 8 mit der Werkzeugwelle 7 drehfest verbunden.

An der Getriebeanordnung 9 ist koaxial zur Antriebswelle 8 eine Steckwelle 10 drehbar gelagert, die an ihrem aus dem Getriebegehäuse 17 nach oben herausragenden Ende am Außenumfang eine Kupplungsverzahnung 57 hat. Die Steckwelle 10 greift nach Fig. 1 in eine Kupplungshülse 11 ein und ist durch diese gegen Drehung gesichert. Die Kupplungshülse 11 wird von einem Deckel 12 drehfest gehalten, mit dem der Arbeitsbehälter 4 verschlossen ist.

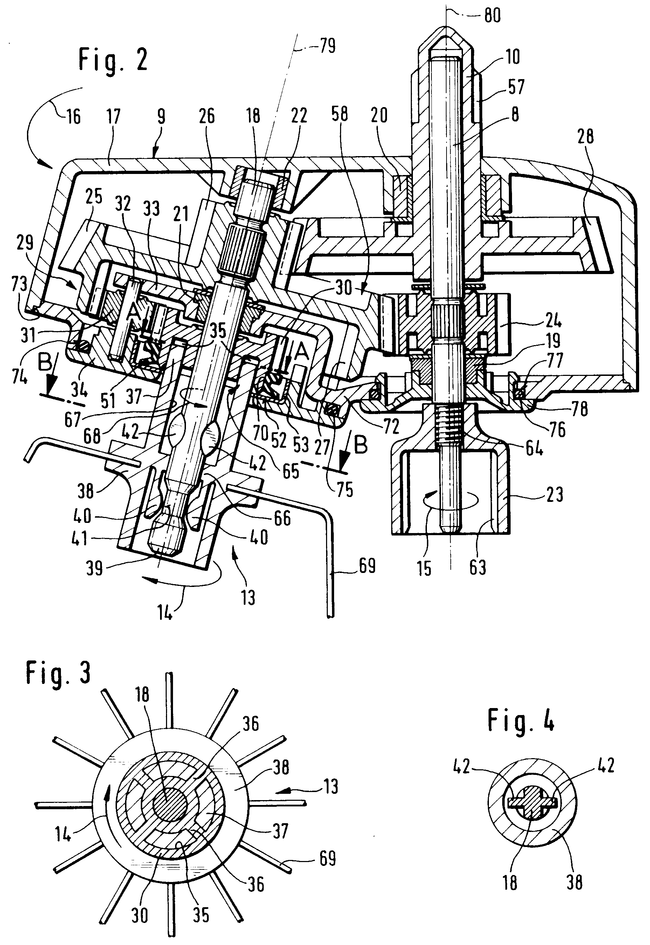

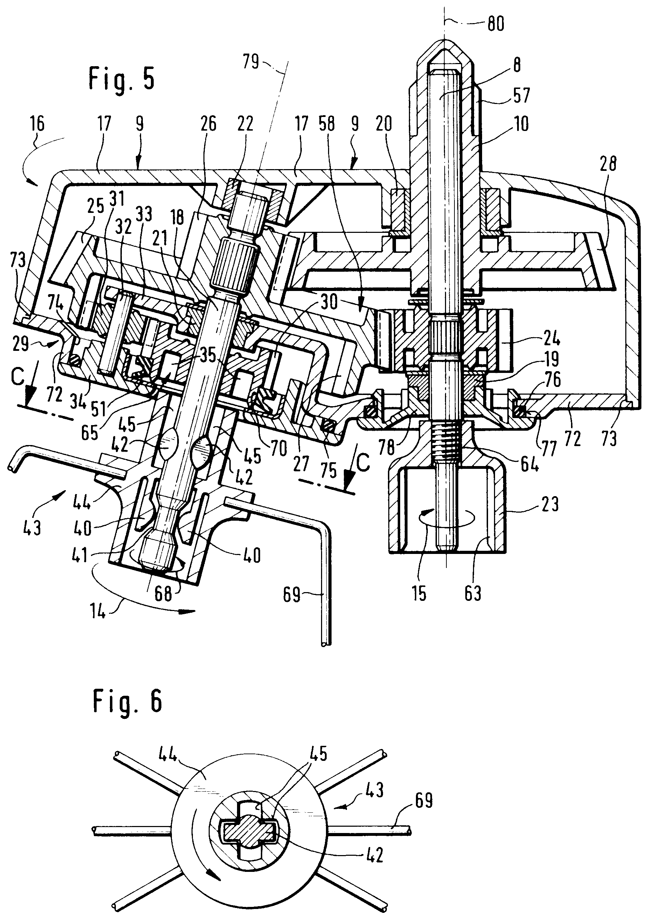

Der Getriebearm 9 weist nach Fig. 1, 2 und 5 in einem Abstand von der Antriebswelle 8 einen Schlagbesen 13 (Fig. 1, 2) bzw. einen Rührbesen 43 (Fig. 5) auf, wobei der Schlagbesen 13 an die schneller drehende 30 bzw. 50 von zwei koaxialen Abtriebswellen 18, 30 bzw. 50 gekuppelt ist und durch eine Drehung der Antriebswelle 8 in Drehung versetzt wird, wobei seine Drehrichtung 14 mit der Drehrichtung 15 der Antriebswelle 8 und somit auch mit der Werkzeugwelle 7 übereinstimmt. Gleichzeitig führt bei einer Drehung der Antriebswelle 8 der das Gehäuse darstellende Getriebearm 17 und somit auch die Getriebeanordnung 9 eine langsame Drehbewegung um die Antriebswelle 8 in der Drehrichtung 16 aus, so daß der Schlagbesen 13 entgegengesetzt zu seiner eigenen Drehrichtung 14 in dem Arbeitsbehälter 4 im Kreis herumgeführt wird. Ein an dem Getriebe 9 befestigter Abweiser 54 (Fig. 1) führt dabei das Arbeitsgut aus dem Zentralbereich (Rohransatz 5) des Arbeitsbehälters 4 dem Schlagbesen 13 immer wieder zu.

Der in den Figuren 2 und 5 im Schnitt dargestellte Getriebearm 9 weist das Getriebegehäuse 17 auf, in welchem koaxial zueinander die Antriebswelle 8 und die Steckwelle 10 und in einem Abstand seitlich von diesen eine erste Abtriebswelle 18 in Lagerbuchsen 19, 20, 21, 22 drehbar gelagert sind. Die Antriebswelle 8 ist also einerseits über die Lagerbuchse 19 direkt im Gehäuse 17 und andererseits über die Steckwelle 10, die wiederum über die Lagerbuchse 20 direkt im Gehäuse 17 gelagert ist, indirekt im Gehäuse 17 gelagert. Die erste Abtriebswelle 18 ist zur Antriebswelle 8 etwas geneigt, so daß sich ihre Rotationsachsen 79, 80 in einem außerhalb des Arbeitsbehälters 4 liegenden Punkt schneiden (Fig. 1).

Das untere Antriebsende der Antriebswelle 8 ist nach den Figuren 2, 5 und 7 mit einer Kupplungshülse 23 mit Innenverzahnung 63 über ein Gewinde 64 verschraubt, die auf das außenverzahnte Ende der Werkzeugwelle 7 nach Fig. 1 aufsteckbar ist. Das andere Ende der Antriebswelle 8 greift in die hohle Steckwelle 10 ein und ist in dieser drehbar gelagert.

Auf der Antriebswelle 8 ist nach Fig. 2 und 5 ein im Gehäuse 17 angeordnetes und zylindrisch ausgebildetes erstes Stirnrad 24 befestigt, das auch zur axialen Lagerung der Antriebswelle 8 dient und sich daher an der Lagerbuchse 19 stirnseitig abstützt. Das erste Stirnrad 24 kämmt mit einem kegeligen zweiten Stirnrad 25, das auf der ersten Abtriebswelle 18 befestigt und einstückig mit einem vierten Stirnrad 26 und einem innenverzahnten Hohlrad 27 hergestellt ist. In axialer Richtung ist das zweite Stirnrad 25 mit seinem vierten Stirnrad 26 und seinem Hohlrad 27 und somit auch die erste Abtriebswelle 18 an der Lagerbuchse 21 gelagert.

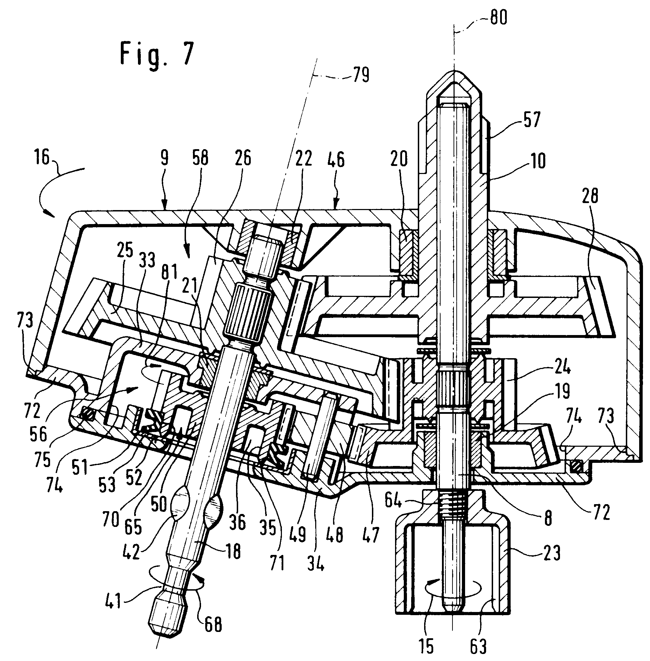

Das vierte Stirnrad 26 kämmt nach den Figuren 2 und 5 mit einem kegeligen fünften Stirnrad 28, das einteilig mit der Steckwelle 10 ausgebildet ist. Da die Steckwelle 10 im Deckel 12 des Arbeitsbehälters 4 festgesetzt wird, wenn dieser auf dem Arbeitsbehälter 4 aufgesetzt wird, sorgen das vierte 26 und das fünfte 28 Stirnrad dafür, daß sich das Gehäuse 17 bei Drehung der Antriebswelle 8 im Arbeitsbehälter 4 um den Rohransatz 5 dreht, allerdings mit wesentlich geringerer und entgegengesetzter Umlaufgeschwindigkeit als die Antriebswelle 8. Das erste Stirnrad 24 bildet mit dem zweiten Stirnrad 25 und der mit letzterem verbundenen ersten Abtriebswelle 18 die erste Getriebestufe 58 des Rühr- und Knetwerkzeuges, was sich sowohl auf das Rühr- und Knetwerkzeug nach den Figuren 2 und 5 als auch auf das Rühr- und Knetwerkzeug nach Fig. 7 bezieht.

In dem Hohlrad 27 ist nach den Figuren 2 und 5 ein als zweite Getriebestufe 56 dienendes Planetenradgetriebe 29 angeordnet, das aus einer auf der ersten Abtriebswelle 18 drehbar gelagerten, als Sonnenrad ausgebildeten zweiten Abtriebswelle 30 besteht, die über Planetenräder 31 mit dem Hohlrad 27 kämmt, wobei die Achsen 32 der Planetenräder 31 in einem durch das Getriebegehäuse 17 gebildeten und konzentrisch zur ersten Abtriebswelle 18 verlaufenden Steg 33 und einem am Getriebegehäuse 17 befestigten Deckel 34 gelagert sind.

Die zweite Abtriebswelle 30 weist nach den Figuren 2 und 5 auf ihrer dem Deckel 34 zugekehrten Stirnseite kreisringsektorförmige Ausnehmungen 35 auf, die durch radiale Stege 36 voneinander getrennt sind (Fig. 3). Hierdurch bildet die zweite Abtriebswelle 30 eine zweite Kupplungshälfte 65 einer axial einrückbaren Klauenkupplung, in die eine komplementär ausgebildete Kupplungshälfte 37 an der Nabe 38 des Schlagbesens 13 eingreift, wie dies in Fig. 2 dargestellt ist. Die Habe 38 ist auf dem aus dem Getriebegehäuse 17 herausragenden Ende 39 der ersten Abtriebswelle 18 über Vorsprünge 66 drehbar gelagert und in axialer Richtung durch radial federnde Sperren 40 fixiert, die an der Nabe 38 ausgebildet sind und die in einen radialen Einstich 41 in der ersten Abtriebswelle 18 eingreifen.

Zwischen der zweiten Abtriebswelle 30 und dem Einstich 41 weist die erste Abtriebswelle 18 zwei angeformte Mitnehmer 42 auf, die zum Antrieb eines ein Werkzeug bildenden Rührbesens 43 dienen, wie dies in Fig. 5 dargestellt ist. In dem weiteren Abschnitt der Bohrung 67 der Nabe 38 liegen nach Fig. 2 die Mitnehmer 42 jedoch frei, so daß sich die Nabe 38 ungehindert gegenüber der ersten Abtriebswelle 18 drehen kann (Fig. 4), wenn der Schlagbesen 13 mit seiner Kupplungshälfte 37 in die zweite Kupplungseinrichtung 65 der zweiten Abtriebswelle 30 eingreift.

Die zweite Abtriebswelle 30 und der damit gekuppelte Schlagbesen 13 werden nach Fig. 2 im Vergleich zur ersten Abtriebswelle 18 etwa mit der doppelten Drehzahl und in der zur Drehrichtung 18 entgegengesetzten Drehrichtung 14 angetrieben, während gleichzeitig das Getriebegehäuse 17 mit der ersten Abtriebswelle 18 und dem Schlagbesen 13 in der Drehrichtung 16 umläuft.

In Fig. 5 ist im Gegensatz zu Fig. 2 der Getriebearm 9 nicht mit dem Schlagbesen 13, sondern mit einem daran gekuppelten, als Werkzeug dienenden Rührbesen 43 gezeigt. Die Drähte 69 des Rührbesens 43 weisen nach den Figuren 5 und 6 einen dickeren Durchmesser auf, als die des Schlagbesens 13 nach den Figuren 2 und 3. Aus diesem Grund dient der Rührbesen 43 mit niedrigerer Drehzahl zum Rühren von festeren und der Schlagbesen 13 mit höherer Drehzahl zum Schlagen von flüssigeren Nahrungsmitteln.

Die Habe 44 des Rührbesens 43 ist nach den Figuren 5 und 6 in gleicher Weise wie die Nabe 38 des Schlagbesens 13 nach Fig. 2 mit in den Einstich 41 eingreifenden Sperren 40 gehalten. Das kupplungsseitige Ende der Nabe 44 ist jedoch kürzer und greift somit nicht in die Ausnehmungen 35 der zweiten Abtriebswelle 30 ein. Im Bereich der Mitnehmer 42 ist die Nabe 44 nach Fig. 6 mit Längsnuten 45 versehen, in die die Mitnehmer 42 eingreifen, um so das Drehmoment von der ersten Abtriebswelle 18 auf den Rührbesen 43 zu übertragen.

Der Rührbesen wird durch den Eingriff 42 mit der ersten Abtriebswelle 18 mit einer langsameren, sich durch das Übersetzungsverhältnis der ersten Getriebestufe 58 ergebenden Drehzahl angetrieben, wobei seine Drehrichtung der Drehrichtung 16 des Getriebegehäuses 17 entspricht (Fig. 5). Während es bei der höheren Drehzahl des Schlagbesens 13 (Fig. 2) für den Arbeitsgang wichtig ist, daß sich der Schlagbesen 13 entgegengesetzt zum Getriebegehäuse 17 dreht, ist es bei dem langsamer drehenden Rührbesen 43 eher vorteilhaft, wenn sich am Rand des Arbeitsbehälters 4 die Drehgeschwindgikeiten von Rührbesen 43 und Getriebegehäuse 17 zu einer höheren Relativgeschwindigkeit gegenüber dem Arbeitsbehälter 4 addieren.

In Fig. 7 ist eine Ausführungsform eines Getriebes 46 dargestellt, welches bis auf die Ausbildung des schnell laufenden Abtriebs für den Schlagbesen 13, also der zweiten Getriebestufe 56 mit dem beschriebenen Getriebe 9 nach Fig. 2 übereinstimmt. Hinsichtlich der mit dem Getriebe 9 übereinstimmenden Merkmale wird daher auf die vorangegangene Beschreibung und die Positionsnummern Bezug genommen.

Anstelle des in Fig. 2 als zweite Getriebestufe 29 dienenden Planetenradgetriebes ist in der Ausführungsform nach Fig. 7 als zweite Getriebestufe ein zweites Stirnradgetriebe 56 vorgesehen. Das Stirnradgetriebe 56 weist nach Fig. 7 ein an das erste Stirnrad 24 angeformtes, kegeliges Stirnrad 47 auf, das über ein Zwischenrad 48, das auf einer Achse 49 zwischen dem Steg 33 und dem Deckel 34 im Getriebegehäuse 17 gelagert ist, ein in seiner Ausgestaltung der zweiten Abtriebswelle 30 (Figuren 2 und 5) entsprechendes drittes Stirnrad 50 antreibt.

Die zweite Abtriebswelle 50 weist nach Fig. 7 ebenfalls wie in Fig. 2 Ausnehmungen 35 und Stege 36 auf, die eine mit der Kupplungshälfte 37 des Schlagbesens 13 kuppelbare zweite Kupplungshälfte 65 bilden. Die Drehrichtung 68 der ersten Abtriebswelle 18 ist, genauso wie die Drehrichtung 16 des Gehäuses 9, im Uhrzeigersinn, während die Drehrichtung 81 der zweiten Abtriebswelle 50 entgegen dem Uhrzeigersinn verläuft.

Die Abdichtung der zweiten Abtriebswelle 30 (Figuren 2 und 5) bzw. 50 (Fig. 7) und des dritten Stirnrads 50 gegenüber dem Getriebegehäuse 17 erfolgt durch einen Lippendichtring 51, der auf eine zylindrische Fläche 70 am Außenumfang der zweiten Abtriebswelle 30 bzw. 50 aufgesetzt ist und mit seiner Dichtlippe an einer Dichtfläche 52 auf der Innenseite der Gehäusewand anliegt. Die Dichtfläche 52 wird durch einen ringförmigen Einsatz 53 aus einem verschleißfesten Werkstoff mit günstigen Gleiteigenschaften gebildet. An dem Einsatz 53 wird auch die zweite Abtriebswelle 30 bzw. 50 über einen Ringbund 71 in axialer Richtung geführt.

Nach den Figuren 2 und 5 ist der Steg 33 mit einem ringförmigen Flanschteil 72 verbunden, das in eine im Getriebegehäuse gebildete Bohrung 73 eingesetzt ist. Das Flanschteil 72 weist wiederum eine Öffnung 74 auf, die von dem Deckel 34 verschlossen ist. Der Deckel 34 wird gegenüber dem Flanschteil 72 durch einen O-Ring 75 gedichtet. Während in Fig. 7 nur ein einziger Deckel 34 das Getriebegehäuse 17 von unten verschließt, wird in den Figuren 2 und 5 die Bohrung 77, die von der Werkzeugwelle 8 durchdrungen wird, von einem weiteren Deckel 78 verschlossen, der gegenüber dem Flanschteil 72 mittels eines weiteren O-Rings 76 gedichtet ist.

## Patentansprüche

1. Rühr- und Knetwerkzeug für eine Küchenmaschine, insbesondere für eine Mehrzweckküchenmaschine, mit einem in einem Gehäuse (17) angeordneten Getriebe (9) mit einer ersten Getriebestufe (58), das eingangsseitig einerseits eine im Gehäuse (17) gelagerte Antriebswelle (8) aufweist, die auf einer in den Arbeitsbehälter (4) der Küchenmaschine hineinragenden, von der Antriebseinrichtung der Küchenmaschine in Drehung versetzbaren Werkzeugwelle (7) aufsetzbar und mit dieser drehfest kuppelbar ist und das ausgangsseitig andererseits eine Abtriebswelle (18) mit einer ersten Kupplungseinrichtung (42) zum Ankuppeln von mindestens einem die Nahrungsmittel im Arbeitsbehälter (4) bearbeitenden Werkzeug (13) aufweist, wobei die Abtriebswelle (18) seitlich neben der Antriebswelle (8) im Gehäuse (17) gelagert ist und mit seiner das Werkzeug (43) kuppelbaren ersten Kupplungseinrichtung (42) auf den Boden (62) des Arbeitsbehälters (4) gerichtet ist und wobei das Getriebe (9) eine zweite Getriebestufe (29 bzw. 56) aufweist, die ausgangsseitig eine zweite Abtriebswelle (30, 50) mit einer zweiten Kupplungseinrichtung (35) zum Ankuppeln von mindestens einem weiteren, die Nahrungsmittel bearbeitenden Werkzeug (43) aufweist,
**dadurch gekennzeichnet**,
daß die erste Getriebestufe (58) von einem miteinander kämmenden Zahnradpaar gebildet wird, das aus einem ersten Stirnrad (24) und einem zweiten Stirnrad (25) besteht, daß das erste Stirnrad (24) mit der Antriebswelle (8) und das zweite Stirnrad (25) mit der ersten Abtriebswelle (18) drehfest verbunden ist, daß die zweite Abtriebswelle (30) konzentrisch zur ersten Abtriebswelle (18) verläuft, daß die zweite Abtriebswelle (30) von dem ausgangsseitigen Zahnrad der zweiten Getriebestufe (29 bzw. 56) gebildet wird, daR an dem Zahnrad (30) stirnseitig die zweite Kupplungseinrichtung (65) vorgesehen ist und daß an dem zweiten Stirnrad (25) ein konzentrisch zu diesem verlaufendes viertes Stirnrad (26) ausgebildet ist, das mit einem auf der Antriebswelle (8) drehbar gelagerten fünften Stirnrad (28) in Zahneingriff steht, wobei das fünfte Stirnrad (28) mit einer an ihm angebrachten Steckwelle (10) aus dem Gehäuse (9) herausragt und über eine Kupplungsverzahnung (57) drehfest mit dem Deckel (12) des Arbeitsbehälters (4) kuppelbar ist.

2. Rühr- und Knetwerkzeug nach Anspruch 1,
**dadurch gekennzeichnet**,
daß die erste Abtriebswelle (18) im Gehäuse (9) drehbar gelagert ist, daß die zweite Getriebestufe (29) von einem Planetengetriebe (29) mit einem Sonnenrad (30) und Planetenrädern (31) gebildet wird, daR das Planetengetriebe (29) koaxial zur ersten Abtriebswelle (18) angeordnet ist, daß die zweite Abtriebswelle das Sonnenrad (30) bildet und daß die Planetenräder (31) im Gehäuse (17) des Getriebes (9) gelagert sind und von einem innenverzahnten Hohlrad (27) angetrieben werden, das mit der ersten Abtriebswelle (18) drehfest verbunden ist.

3. Rühr- und Knetzwerkzeug nach Anspruch 2,
**dadurch gekennzeichnet**,
daß das Hohlrad (27) durch einen am zweiten Stirnrad (25) ausgebildeten, ringförmig verlaufenden Ansatz gebildet ist.

4. Rühr- und Knetwerkzeug nach Anspruch 1,
**dadurch gekennzeichnet**,
daß die erste Abtriebswelle (18) im Gehäuse (9) drehbar gelagert ist, daß koaxial zur ersten Abtriebswelle (18) ein die zweite Abtriebswelle (30) bildendes drittes Stirnrad (50) angeordnet ist, das über ein im Getriebegehäuse (17) gelagertes Zwischenrad (48) von einem mit der Antriebswelle (8) drehfest verbundenen Stirnrad (47) angetrieben wird.

5. Rühr- und Knetwerkzeug nach Anspruch 2 oder 4,
**dadurch gekennzeichnet**,
daß die zweite Getriebestufe (29 bzw. 56) zwischen einem konzentrisch zur ersten Abtriebswelle (18) verlaufenden Deckel (34) und im Abstand zu diesem im Gehäuse (9) angeordneten und ebenfalls zur ersten Abtriebswelle (18) konzentrisch verlaufenden Steg (33) gelagert ist.

6. Rühr- und Knetwerkzeug nach Anspruch 5,
**dadurch gekennzeichnet**,
daß die erste Abtriebswelle (18) einerseits im Steg (33) und andererseits im Gehäuse (9) gelagert ist.

7. Rühr- und Knetwerkzeug nach Anspruch 5,
**dadurch gekennzeichnet,**
daß die zweite Abtriebswelle (30 bzw. 50) auf der ersten Abtriebswelle (18) drehbar gelagert ist.

8. Rühr- und Knetwerkzeug nach Anspruch 2,
**dadurch gekennzeichnet**,
daß das Hohlrad (27) sowohl den Steg wie die Planetenräder (31) von außen umschließt.

9. Rühr- und Knetwerkzeug nach Anspruch 5,
**dadurch gekennzeichnet,**
daß die zweite Abtriebswelle (30 bzw. 50) am Außenumfang ihrer die zweite Kupplungseinrichtung (35) bildenden Stirnseite einen Dichtring (51) trägt, der an einer Dichtfläche (52) auf der Innenseite des als Deckel (34) ausgebildeten Abschnitts des Gehäuses (17) gleitend anliegt.

10. Rühr- und Knetwerkzeug nach Anspruch 2 oder 4,
**dadurch gekennzeichnet**,
daß die Rotationsachsen (79, 80) der Antriebswelle (8) und der Abtriebswelle (18) sich über dem Arbeitsbehälter (4) schneiden.

11. Rühr- und Knetwerkzeug nach Anspruch 11,
**dadurch gekennzeichnet,**
daß die miteinander kämmenden Stirnräder (28, 26 bzw. 24, 25 bzw. 47, 48) von einer Verzahnungspaarung gebildet werden, die einerseits aus einer Längsverzahnung und andererseits aus einer mit dieser kämmenden Schrägverzahnung besteht.

## Claims

1. A mixing and kneading tool for a kitchen appliance, in particular for a multi-purpose kitchen appliance, with a gear mechanism (9) disposed within a housing (17) and having a first gear set (58) including at its input end a drive shaft (8) mounted in the housing (17), said drive shaft being adapted to be seated upon a tool shaft (7) that projects into the interior of the processing container (4) of the kitchen appliance and is adapted to be rotated by the drive mechanism of the kitchen appliance, said drive shaft being adapted to be coupled to said tool shaft in a manner preventing relative rotation, and further including at its output end a driven shaft (18) having a first coupling device (42) for coupling engagement of at least one tool (13) processing the food materials in the processing container (4), with the driven shaft (18) being mounted in the housing (17) laterally adjacent to the drive shaft (8) and extending with its first coupling device (42) to which the tool (13) is adapted to be coupled in the direction of the bottom (62) of the processing container (4), said gear mechanism (9) having a second gear set (29 and 56, respectively) including at its output end a second driven shaft (30, 50) provided with a second coupling device (35) for coupling engagement of at least one further tool (43) processing the food materials,
**characterized in that** the first gear set (58) is formed of a pair of meshing gears comprised of a first spur gear (24) and a second spur gear (25), that the first spur gear (24) is connected to the drive shaft (8) and the second spur gear (25) is connected to the first driven shaft (18) in a manner preventing relative rotation, that the second driven shaft (30) extends concentrically with the first driven shaft (18), that the second driven shaft (30) is formed of the gear of the second gear set (29 and 56, respectively) at the output end, that a second coupling device (65) is provided on the gear (30) on face end, and that the second spur gear (25) provides thereon a fourth spur gear (26) extending concentrically therewith and meshing with a fifth spur gear (28) rotatably mounted on the drive shaft (8), with the fifth spur gear (28) having a plug-in shaft (10) fitted thereto that protrudes out of the housing (17) and is adapted to be coupled to the lid (12) of the processing container (4) by means of coupling teeth (57) in a non-rotating relationship.

2. The mixing and kneading tool as claimed in claim 1,
**characterized in that** the first driven shaft (18) is rotatably mounted in the housing (17), that the second gear set (29) is formed of a planetary gear train (29) comprising a sun gear (30) and planetary gears (31), that the planetary gear train (29) is disposed coaxially with the first driven shaft (18), that the second driven shaft provides the sun gear (30), and that the planetary gears (31) are mounted in the housing (17) of the gear mechanism (9) and driven by an internally toothed ring gear (27) connected to the first driven shaft (18) in a manner preventing relative rotation.

3. The mixing and kneading tool as claimed in claim 2,
**characterized in that** the ring gear (27) is formed of an annularly extending collar provided on the second spur gear (25).

4. The mixing and kneading tool as claimed in claim 1,
**characterized in that** the first driven shaft (18) is rotatably mounted in the housing (17), that a third spur gear (50) forming the second driven shaft (30) is disposed coaxially with the first driven shaft (18), said third spur gear being driven, through an intermediate gear (48) mounted in the gear housing (17), by a spur gear (47) connected to the drive shaft (8) in a manner preventing relative rotation.

5. The mixing and kneading tool as claimed in claim 2 or claim 4,
**characterized in that** the second gear set (29 and 56, respectively) is mounted between a cover (34) extending concentrically with the first driven shaft (18) and a web member (33) disposed in a spaced relationship thereto in the housing (17) and equally extending concentrically with the first driven shaft (18).

6. The mixing and kneading tool as claimed in claim 5,
**characterized in that** the first driven shaft (18) is carried in the web member (33), in addition to being carried in the housing (17).

7. The mixing and kneading tool as claimed in claim 5,
**characterized in that** the second driven shaft (30 and 50, respectively) is rotatably mounted on the first driven shaft (18).

8. The mixing and kneading tool as claimed in claim 2,
**characterized in that** the ring gear (27) encompasses from the outside both the web member and the planetary gears (31).

9. The mixing and kneading tool as claimed in claim 5,
**characterized in that** the second driven shaft (30 and 50, respectively) carries a sealing ring (51) on the outer periphery of its end forming the second coupling device (35), said sealing ring being in sliding engagement with a sealing surface (52) on the inside of a portion of the housing (17) configured as the cover (34).

10. The mixing and kneading tool as claimed in claim 2 or claim 4,
**characterized in that** the axes of rotation (79, 80) of the drive shaft (8) and the driven shaft (18) intersect above the processing container (4).

11. The mixing and kneading tool as claimed in claim 1,
**characterized in that** the meshing spur gears (28, 26 and, respectively, 24, 25 and, respectively 47, 48) are formed by a pair of teeth comprised of an elongate toothed portion and a helically toothed portion meshing therewith.

## Revendications

1. Outil mélangeur et pétrisseur pour un robot de cuisine, en particulier un robot de cuisine à multiples fonctions, comportant une transmission (9) agencée dans un boîtier (17) et présentant un premier étage d'entraînement (58), qui présente d'une part du côté entrée un arbre d'entraînement (8) monté dans un boîtier (17), qui peut être posé sur un arbre d'outil (7) pénétrant dans le récipient de travail (4) du robot de cuisine et pouvant être mis en rotation par le dispositif d'entraînement du robot de cuisine, et pouvant être accouplé solidairement en rotation à cet arbre d'outil ; et qui présente d'autre part du côté sortie un arbre mené (18) comportant un premier dispositif d'accouplement (42) pour accoupler au moins un outil (13) traitant les denrées alimentaires dans le récipient de travail (4), l'arbre mené (18) étant monté latéralement à côté de l'arbre d'entraînement (8) dans le boîtier (17) et dirigé par son premier dispositif d'accouplement (42) susceptible d'être accouplé à l'outil en direction du fond (62) du récipient de travail (4), et la transmission (9) présentant un second étage d'entraînement (29 ou 56) qui présente du côté sortie un second arbre mené (30, 50) comportant un second dispositif d'accouplement (35) pour accoupler au moins un autre outil (43) traitant les denrées alimentaires, caractérisé en ce que le premier étage d'entraînement (58) est formé par une paire de roues dentées en engrènement mutuel, qui est constituée par une première roue droite (24) et par une seconde roue droite (25), en ce que la première roue droite (24) est reliée solidairement en rotation à l'arbre d'entraînement (8) et la seconde roue droite (25) est reliée solidairement en rotation au premier arbre mené (18), en ce que le second arbre mené (30) s'étend concentriquement au premier arbre mené (18), en ce que le second arbre mené (30) est formé par la roue dentée du côté sortie du second étage d'entraînement (29 ou 56), en ce qu'il est prévu sur la roue dentée (30) du côté frontal un second dispositif d'accouplement (65), et en ce que sur la seconde roue droite (25) est réalisée une quatrième roue droite (26) s'étendant concentriquement à celle-ci, qui se trouve en engrènement avec une cinquième roue droite (28) montée en rotation sur l'arbre d'entraînement (8), la cinquième roue droite (28) dépassant hors du boîtier (9) par un arbre à enfichage (10) agencé sur cette cinquième roue, et pouvant être accouplé via une denture d'accouplement (57) solidairement en rotation au couvercle (12) du récipient de travail (4).

2. Outil mélangeur et pétrisseur selon la revendication 1, caractérisé en ce que le premier arbre mené (18) est monté en rotation dans le boîtier (9), en ce que le second étage d'entraînement (29) est formé par un engrènement planétaire (29) comportant une roue solaire (30) et des roues planétaires (31), en ce que l'engrènement planétaire (29) est agencé coaxialement au premier arbre mené (18), en ce que le second arbre mené forme la roue solaire (30), et en ce que les roues planétaires (31) sont montées dans le boîtier (17) de la transmission (9) et sont entraînées par une roue creuse (27) dentée intérieurement qui est reliée solidairement en rotation au premier arbre mené (18).

3. Outil mélangeur et pétrisseur selon la revendication 2, caractérisé en ce que la roue creuse (27) est formée par un talon réalisé sur la seconde roue droite (25) et s'étendant de façon annulaire.

4. Outil mélangeur et pétrisseur selon la revendication 1, caractérisé en ce que le premier arbre mené (18) est monté en rotation dans le boîtier (9), en ce qu'il est prévu coaxialement au premier arbre mené (18) une troisième roue droite (50) formant le second arbre mené (30) et étant entraînée via une roue intermédiaire (48) montée dans le boîtier de transmission (17) par une roue droite (47) reliée solidairement en rotation à l'arbre d'entraînement (8).

5. Outil mélangeur et pétrisseur selon l'une ou l'autre des revendications 2 et 4, caractérisé en ce que le second étage d'entraînement (29 ou 56) est monté entre un couvercle (34) s'étendant concentriquement au premier arbre mené (18) et une barrette (33) agencée à distance de ce couvercle dans le boîtier (9) et s'étendant également concentriquement au premier arbre mené (18).

6. Outil mélangeur et pétrisseur selon la revendication 5, caractérisé en ce que le premier arbre mené (18) est monté d'une part dans la barrette (33) et d'autre part dans le boîtier (9).

7. Outil mélangeur et pétrisseur selon la revendication 5, caractérisé en ce que le second arbre mené (30 ou 50) est monté en rotation sur le premier arbre mené (18).

8. Outil mélangeur et pétrisseur selon la revendication 2, caractérisé en ce que la roue creuse (27) entoure aussi bien la barrette que les roues planétaires (31) depuis l'extérieur.

9. Outil mélangeur et pétrisseur selon la revendication 5, caractérisé en ce que le second arbre mené (30 ou 50) porte à la périphérie extérieure de sa face frontale formant le second dispositif d'accouplement (35) une bague d'étanchéité (51) qui s'appuie en coulissement contre la surface d'étanchement (52) sur la face intérieure du tronçon du boîtier (17) réalisé sous forme d'un couvercle (34).

10. Outil mélangeur et pétrisseur selon l'une ou l'autre des revendications 2 et 4, caractérisé en ce que les axes de rotation (79, 80) de l'arbre d'entraînement (8) et de l'arbre mené (18) se recoupent au-dessus du récipient de travail (4).

11. Outil mélangeur et pétrisseur selon la revendication 10, caractérisé en ce que les roues droites (28, 26, ou 24, 25, ou 47, 48) en engrènement mutuel sont formées par une paire de dentures qui sont constituées d'une part par une denture longitudinale et d'autre part par une denture oblique en engrènement avec celle-ci.
